# EUROPEAN PATENT APPLICATION

(11) **EP 0 955 719 A2**
(43) Date of publication of application: **10.11.1999**
(21) Application number: 99303284.6
(22) Date of filing: 27.04.1999
(51) Int. Cl.: H02M 3/155, H02M 7/217

(54) **Boost converter having reduced output voltage and method of operation thereof**

(30) Priority: 04.05.1998 US 72390
(71) Applicant: LUCENT TECHNOLOGIES INC., Murray Hill, New Jersey 07974-0636 (US)
(72) Inventor: Jiang, Yimin, Plano, Texas 75023 (US)
(74) Representative: Buckley, Christopher Simon Thirsk

(57) **Abstract**

For use with a boost converter (100) having a three phase rectifier (130), a boost switch (140) coupled across the rectifier and a boost diode (145), operable in discontinuous mode, coupled between the rectifier and an output of the boost converter, a circuit for, and method of, providing a reduced output voltage from the boost converter. In one embodiment, the circuit includes an autotransformer (155), coupled across the output, that has an intermediate tap for providing the reduced output voltage.

## Description

### TECHNICAL FIELD OF THE INVENTION

The present invention is directed, in general, to power conversion and, more specifically, to a three-phase boost converter having a reduced output voltage and a method of operating the same.

### BACKGROUND OF THE INVENTION

Regulated DC power supplies are typically needed for most analog and digital electronic systems. Two major categories of regulated DC power supplies are linear power supplies and switching power supplies. Generally, in linear power supplies, to provide electrical isolation between an input and an output and to provide the output in a desired voltage range, a transistor (operating in its active region) is connected in series with a transformer, e.g., a 60-Hz transformer.

In switching power supplies, transformation of DC voltage from one level to another is accomplished typically with DC/DC converter circuits, such as a step-down (buck) or step-up (boost) circuit. Solid-state devices, such as transistors, are operated as switches (either completely ON or completely OFF) within these switching converters. Since the power devices are not required to operate in their active region, this mode of operation results in lower power dissipation. Furthermore, increasing switching speeds, higher voltage and current ratings of these power devices are some of the factors that have increased the popularity of switching power supplies.

For applications requiring three phase off-line rectification with low input current total harmonic distortions (THDs), the simplest switching power converter topology is a single switch discontinuous current mode (DCM) boost converter. By operating the boost converter's three input inductors in DCM, at the beginning of each switching cycle when the boost switch is ON, currents through the input inductors begin to ramp up from an initial value of zero at a rate that is proportional to the input inductors corresponding phase to neutral voltage. Consequently, the input inductor currents, which are also the phase currents, are naturally proportional to their corresponding phase voltages during the period when the boost switch is ON. When the boost switch is OFF, an output voltage that is higher than the peak of the input phase-to-phase voltage will drive the input inductors' currents to reduce back to zero prior to the initiation of the next switching cycle. The rate of decrease of each input inductor's current, however, is not proportional to its corresponding input phase-to-neutral voltage due to the different amounts of energy that had been stored in each input inductor. As a result, the input inductor currents during the period when the boost switch is OFF are also not proportional to the input inductors' corresponding phase-to-neutral voltages resulting in distortions in the input phase currents. It should be noted that the higher the output voltage is, the faster are the individual input inductor currents' rate of decrease. The faster the input inductor currents are decreased to zero has the corresponding benefit of reducing the distortions in the input currents.

Studies have shown that to achieve a total harmonic distortion (THD) of less than 10%, the output voltage is required to be greater than 1.7 times the input phase-to-phase peak voltage (M > 1.7; where M = Vout/Vin(rms)). This high output voltage requirement for a low THD normally results in an output voltage that is higher than what is generally desired. For example, for an input voltage 208 Vrms and taking into account the presence of input voltage fluctuations, the output voltage would be required to be about 650 V to realize THDs of less than 10%. This 650 V output voltage is much higher than a 440 V output that is normally desired. For an input voltage of 440 Vrms, the required output voltage would then have to be as high as 1300 V (far above a conventional 800 V output) to achieve THDs of less than 10%.

Accordingly, what is needed in the art is an improved power converter that overcomes the above described limitations. More specifically, what is needed in the art is a power converter with a low output to input voltage ratio with the inherent low THD characteristics of a power converter with a high output to input voltage ratio (M > 1.7).

### SUMMARY OF THE INVENTION

To address the above-discussed deficiencies of the prior art, the present invention provides, for use with a boost converter having a three phase rectifier, a boost switch coupled across the rectifier and a boost diode, operable in discontinuous mode, coupled between the rectifier and an output of the boost converter, a circuit for, and method of, providing a reduced output voltage from the boost converter. In one embodiment, the circuit includes an autotransformer, coupled across the output, that has an intermediate tap for providing the reduced output voltage.

The present invention therefore introduces the broad concept of employing an autotransformer to reduce a boost converter's output voltage. The present invention discloses a novel circuit that takes advantage of the low THD inherent in a boost converter with high M, e.g., M > 1.7. The present invention introduces a circuit at the output stage of the boost converter that provides an output voltage that is at a desired lower value while still enjoying the low THD provided by the boost operation.

In one embodiment of the present invention, the circuit further includes an output capacitor, coupled to the intermediate tap, that attenuates a DC component in the reduced output voltage. Those skilled in the art are familiar with output capacitors and their function in providing a DC output in boost converters.

In one embodiment of the present invention, the intermediate tap is a center tap of the autotransformer. Alternatively, the intermediate tap may not "bisect" the windings of the autotransformer.

In one embodiment of the present invention, the circuit further includes a snubber circuit, coupled to the boost switch, that clamps a voltage overshoot occurring therein. In a more specific embodiment, the snubber circuit is a passive snubber circuit. Alternatively, the snubber circuit may be an active snubber circuit. The present invention does not, however, require a snubber circuit.

In one embodiment of the present invention, the autotransformer comprises windings having equal numbers of turns. The windings may alternatively differ in numbers of turns. The present invention is not limited to a particular turns-ratio.

In one embodiment of the present invention, the circuit further includes a diode series-coupled with the autotransformer across the output. The diode rectifies power through the autotransformer. Alternatively, an active switch can perform the function if it is desired in a particular application.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### BRIEF DESCRIPTION OF THE DRAWINGS

For a more complete understanding of the present invention, reference is now made to the following descriptions taken in conjunction with the accompanying drawings, in which:
FIGURE 1 illustrates a schematic diagram of an embodiment of a three-phase boost converter constructed according to the principles of the present invention;
FIGURE 2 illustrates a schematic diagram of an embodiment of a converter using the principles of the present invention and further employing an active lossless snubber circuit; and
FIGURE 3 illustrates a schematic diagram of an embodiment of a converter using the principles of the present invention and further employing a passive lossless snubber circuit.

### DETAILED DESCRIPTION

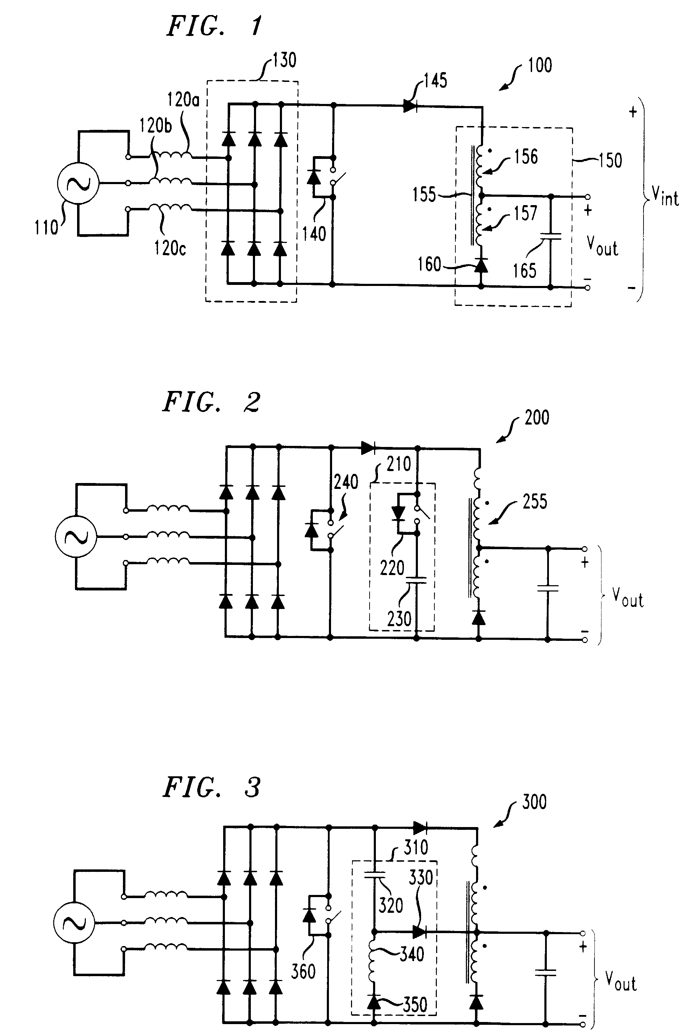

Referring initially to FIGURE 1, illustrated is a schematic diagram of an embodiment of a three phase boost converter 100 constructed according to the principles of the present invention. The boost converter 100 receives input power from a three-phase voltage source 110 through first, second and third boost inductors 120a, 120b, 120c that are coupled to a rectifier 130 comprising a plurality of diodes arrayed in a full bridge configuration. The rectifier 130 rectifies the AC input voltage prior to its delivery to the boost converter's 100 output stage when a boost switch 140 is OFF, i.e., not conducting. When the boost switch 140 (illustrated with an internal body diode) is ON, i.e., conducting, the boost diode 145 becomes reverse biased, thus isolating the output stage. Also, during the period when the boost switch 140 is ON, the AC input supplies energy to the first, second and third boost inductors 120a, 120b, 120c.

As discussed previously, at the beginning of each switching cycle when the boost switch 140 is ON, currents through the first, second and third boost inductors 120a, 120b, 120c [when operating in discontinuous current mode (DCM)] begin to ramp up from an initial value of zero at a rate that is proportional to the boost inductors corresponding phase to neutral voltage. Consequently, the boost inductor currents, which are also the phase currents, are naturally proportional to their corresponding phase voltage during the period when the boost switch 140 is ON. When the boost switch 140 is OFF, an output voltage Vboost that is higher than the peak of the input phase-to-phase voltage will drive the first, second and third boost inductors 120a, 120b, 120c currents to reduce back to zero prior to the initiation of the next switching cycle. The rate of decrease of each inductor's current, however, is not proportional to its corresponding input phase-to-neutral voltage due to the different amounts of energy that had been stored in each inductor. Consequently, the inductor currents during the period when the boost switch 140 is OFF are also not proportional to the inductors' corresponding phase-to-neutral voltage resulting in distortions in the input phase currents. It should be noted that the higher the output voltage Vboost is, the faster are the individual inductor current's rate of decrease. The faster the inductor currents are decreased to zero has the corresponding benefit of reducing the distortions in the input currents.

Studies have shown that to achieve a total harmonic distortion (THD) of less than 10%, the output voltage is required to be greater than 1.7 times the input phase-to-phase peak voltage (M > 1.7; where M = Vout/Vin(rms)). This high output voltage requirement for a low THD normally results in an output voltage that is higher than what is generally desired. For example, for an input voltage 208 Vrms and taking into account the presence of input voltage fluctuations, the output voltage would be required to be about 650 V to realize THDs of less than 10%. This 650 V output voltage is much higher than a 440 V output that is normally desired. For an input voltage of 440 Vrms, the required output voltage would then have to be as high as 1300 V (far above a conventional 800 V output) to achieve THDs of less than 10%.

The present invention discloses a novel circuit that takes advantage of the low THD inherent in a boost converter with high M, e.g., M > 1.7. The present invention introduces a circuit at the output stage of the boost converter 100 that provides an output voltage Vout2 that is at a desired lower value while still enjoying the low THD provided by the boost operation.

At the output stage of the boost converter 100, an output circuit 150 is shown coupled to the boost diode 140. The output circuit includes an autotransformer 155 that is coupled to a diode 160. Those skilled in the art should readily appreciate that an active switch may be substituted for the diode 160 in other advantageous embodiments. The output voltage Vout2 is derived from an intermediate tap of the autotransformer 155. In the illustrated embodiment, the intermediate tap is the center tap of the autotransformer. It should be noted that in other advantageous embodiments, the intermediate tap may not "bisect" the windings of the autotransformer. An output capacitor 165 is shown coupled across the intermediate tap of the autotransformer 155 and the diode 160 to attenuate DC components in the output voltage Vout2.

To illustrate the operation of the converter 100, assume the turns-ratio of the two windings of the autotransformer 155 are equal, i.e., 1:1, and the output voltage Vboost is selected to be at a value just slightly higher than the peak value of the input phase-to-phase voltage (which is the minimum possible voltage with any type of boost converter). When the boost switch 140 is turned OFF, the output voltage Vboost that is driving the discharge of the first, second and third inductors 120a, 120b, 120c is twice the output voltage Vout2 (assuming negligible voltage drops across the diode 160). The output voltage Vboost, at twice the value of the output voltage Vout2, provides a M > 2 value, preserving the low THD feature of a boost converter with high M values. Additionally, since the operation of the converter 100 is equivalent to the operation of a boost converter with M > 2, the first, second and third inductors' 120a, 120b, 120c charging periods are always greater than their respective discharging periods (when the autotransformer 155 is in use) that ensures the autotransformer 155 enough reset time during each switching cycle of the boost switch 140. Although an autotransformer with turns-ratio of 1:1 has been described, in other advantageous embodiments, autotransformers with different turns-ratio may be employed.

The operation of the boost converter 100 may be improved with the addition of a snubber to clamp the voltage "overshoot" transients on the boost switch 140, due to leakage inductances of the autotransformer 155, when the boost switch 140 is turned OFF. The snubber reduces the stresses on the boost switch 140 during switching intervals and transients. Specific embodiments of snubber circuits that may be advantageously employed in the converter 100 are illustrated in FIGUREs 2 and 3. The illustrated embodiments of snubber circuits are conventional snubber circuits well known in the art. Hence, their operation will hereinafter not be described in detail. For a better understanding of snubber circuits and their application in switching power converters, see "Power Electronics: Converters, Applications and Design," by Ned Mohan, et al., John Wiley & Sons, Inc. (1989), which is herein incorporated by reference.

Turning now to FIGURE 2, illustrated is a schematic diagram of an embodiment of a converter 200 using the principles of the present invention and further employing an active lossless snubber circuit 210. The active lossless snubber circuit 210 includes an auxiliary switch 220 series-coupled with a snubber capacitor 230.

Turning now to FIGURE 3, illustrated is a schematic diagram of an embodiment of a converter 300 using the principles of the present invention and further employing a passive lossless snubber circuit 310. The passive lossless snubber circuit 310 includes a capacitor 320 that is series-coupled with an inductor 340 and a diode 350 across a boost switch 360. Also illustrated in the passive lossless snubber circuit is a diode 330 that is coupled to the output of the converter 300.

Although the present invention has been described in detail, those skilled in the art should understand that they can make various changes, substitutions and alterations herein without departing from the spirit and scope of the invention in its broadest form.

## Claims

1. For use with a boost converter having a three phase rectifier, a boost switch coupled across said rectifier and a boost diode, operable in discontinuous mode, coupled between said rectifier and an output of said boost converter, a circuit for providing a reduced output voltage from said boost converter, comprising:
an autotransformer, coupled across said output, that has an intermediate tap for providing said reduced output voltage.

2. For use with a boost converter having a three phase rectifier, a boost switch coupled across said rectifier and a boost diode, operable in discontinuous mode, coupled between said rectifier and an output of said boost converter, a method of providing a reduced output voltage from said boost converter, comprising the steps of:
providing three phase power to said rectifier; and
deriving said reduced output voltage from an intermediate tap of an autotransformer coupled across said output.

3. The method as recited in claim 2 further comprising the step of attenuating a DC component in said reduced output voltage with an output capacitor coupled to said intermediate tap.

4. The method as recited in claim 2 wherein said intermediate tap is a center tap of said autotransformer.

5. The method as recited in claim 2 further comprising the step of clamping a voltage overshoot occurring in said boost switch with a snubber circuit coupled thereto.

6. The method as recited in claim 5 wherein said snubber circuit is a passive snubber circuit.

7. The method as recited in claim 2 wherein said autotransformer comprises windings having equal numbers of turns.

8. The method as recited in claim 2 further comprising the step of series-coupling a diode with said autotransformer across said output.

9. A boost converter, comprising:
a three phase rectifier that receives and rectifies three phase power from a power source;
a boost switch coupled across said rectifier;
a boost diode, operable in discontinuous mode, coupled between said rectifier and an output of said boost converter; and
an autotransformer, coupled across said output, that has an intermediate tap for providing a reduced output voltage from said boost converter.

10. A circuit as claimed in claim 1, or a converter as claimed in claim 9, further comprising an output capacitor, coupled to said intermediate tap, that attenuates a DC component in said reduced output voltage.

11. A circuit as claimed in claim 1, or a converter as claimed in claim 9, wherein said intermediate tap is a center tap of said autotransformer.

12. A circuit as claimed in claim 1, or a converter as claimed in claim 9, further comprising a snubber circuit, coupled to said boost switch, that clamps a voltage overshoot occurring therein.

13. A circuit or converter as claimed in claim 12 wherein said snubber circuit is a passive snubber circuit.

14. A circuit as claimed in claim 1, or a converter as claimed in claim 9, wherein said autotransformer comprises windings having equal numbers of turns.

15. A circuit as claimed in claim 1, or a converter as claimed in claim 9, further comprising a diode series-coupled with said autotransformer across said output.
